# EUROPEAN PATENT APPLICATION

(11) **EP 2 575 331 A1**
(43) Date of publication of application: **03.04.2013**
(21) Application number: 12177184.4
(22) Date of filing: 19.07.2012
(51) Int. Cl.: H04M 1/60, H04M 1/725, H04L 29/06

(54) **Electronic Apparatus and Media System Using Information Terminal**

(30) Priority: 30.09.2011 JP 2011216456
(71) Applicant: Alpine Electronics, Inc., Tokyo (JP)
(72) Inventor: Akatsu, Hiroyuki, Iwaki-city, Fukushima (JP); Ito, Masahiro, Iwaki-city, Fukushima (JP)
(74) Representative: Kensett, John Hinton

(57) **Abstract**

A vehicle-mounted apparatus (30) may be connected to an information terminal (20) through a Bluetooth connection (40) and a USB connection (50). The information terminal (20) prioritizes the Bluetooth connection (40) of the two connections over the USB connection (50). In the vehicle-mounted apparatus (30), if a user selects a media source excluding the Bluetooth connection, a connection cancelling unit (216) cancels a BT audio connection (44) in the Bluetooth connection (40). This allows communication between the information terminal (20) and the vehicle-mounted apparatus (30) through the USB connection (50).

## Description

### BACKGROUND OF THE INVENTION

### 1. Field of the Invention

The present invention relates to an electronic apparatus and a media system having an information terminal connected to the electronic apparatus. It particularly relates to a media system having an information terminal such as a smart phone connected to an electronic apparatus mounted in a vehicle.

### 2. Description of the Related Art

In recent years, an increased number of multi-function cellular phones such as smart phones have been used. Demands have been arisen for using functions implemented in a smart phone also in an electronic apparatus mounted in a vehicle (hereinafter, called a vehicle-mounted apparatus). When a smart phone is brought into a vehicle, the smart phone is connected to a vehicle-mounted apparatus through communication means such as a USB cable, wireless LAN, and Bluetooth (registered trademark). Hands-free talk may be implemented through the smart phone from the vehicle-mounted apparatus, or media data and/or application software held in the smart phone may become available to a vehicle-mounted apparatus.

Japanese Unexamined Patent Application Publication No. 2006-186865 discloses a notebook PC having a plurality of communication systems such as a wireless LAN and the Bluetooth (registered trademark). According to Japanese Unexamined Patent Application Publication No. 2006-186865, when the operational states of a communication function by a wireless LAN and a communication function by the Bluetooth are both turned on, an antenna to be used for communication by the wireless LAN is selected from a plurality of a plurality of antennas. Independent of the ambient communication environment, an antenna not being used for the wireless LAN is assigned for the Bluetooth of low priority. Thus, antennas may be shared by a plurality of communication systems.

General smart phones and vehicle-mounted apparatuses may support a plurality of communication systems. When a smart phone is brought into a vehicle, the smart phone is connectable to a vehicle-mounted apparatus through a plurality of communication systems. In such a case, as disclosed in Japanese Unexamined Patent Application Publication No.2006-186865, communication control is performed under which a connection by one communication system is prioritized over the other communication systems. Some apparatuses may stop the use of a communication system of low priority. For example, when a smart phone and a vehicle-mounted apparatus are connected by a Bluetooth communication and USB communication, the smart phone performs environment setting to prioritize the Bluetooth communication and inhibits use of the USB communication. As a result, a user is inhibited from using the USB communication even when the Bluetooth communication is not used. In order to use the USB communication, a user may be required to perform an operation of cancelling the Bluetooth connection between the vehicle-mounted apparatus and the smart phone. Cancelling the Bluetooth connection while a hands-free talk is being performed through the Bluetooth communication may result in unavailability of the hands-free talk.

Conversely to the above, some smart phones may perform environment setting to prioritize a USB communication and inhibit use of a Bluetooth communication. Also in this case, a user is forced to unplug a cable to disconnect the USB communication in order to use the Bluetooth communication. Forcing a user to perform a complicated work particularly while driving is not desirable.

### SUMMARY OF THE INVENTION

The present invention was made to solve the conventional problems, and it is an object of the present invention to provide an electronic apparatus and a media system using an information terminal, which are capable of switching the communication system with a less burden imposed on a user.

An electronic apparatus according to an aspect of the present invention is capable of connecting an information terminal that processes information. The electronic apparatus includes first connecting means for allowing a connection with the information terminal by using a first communication system, second connecting means for allowing a connection with the information terminal by using a second communication system that is different from the first communication system, selecting means for selecting a media source, and cancelling means for cancelling the connection by the first connecting means on the basis of the media source selected by the selecting means.

Preferably, the first connecting means includes audio connection means for controlling communication of an audio signal in accordance with a first profile and voice talk connection means for controlling communication of voice talk through the information terminal in accordance with a second profile, and the cancelling means cancels the audio connection means only. Preferably, when the selecting means selects a specific media source, the cancelling means cancels the connection by the first connecting means. Preferably, when the selecting means selects a media source excluding a media source relating to the first connecting means, the cancelling means cancels the connection by the first connecting means. Preferably, the second connecting means transmits a command signal that controls the information terminal. Preferably, the second connecting means receives an audio signal reproduced on the basis of the command signal from the information terminal. Preferably, the first connecting means is a wireless communication, and the second connecting means is a wired communication. Preferably, the communication speed of the second connecting means is higher than the communication speed of the first connecting means. Preferably, an audio signal received from the second connecting means has a higher sampling rate or transmission bit rate than an audio signal received from the first connecting means. Preferably, the first connecting means is a Bluetooth connection, and the second connecting means is a USB connection.

An electronic system according to another aspect of the present invention includes an electronic apparatus having the aforementioned characteristics and an information terminal connected to the electronic apparatus. The information terminal prioritizes a connection by the first connecting means over a connection by the second connecting means. The information terminal may prioritize a connection by the second connecting means over a connection by the first connecting means. Preferably, the information terminal makes a communication by the unprioritized one of the first and second connecting means not available. Preferably, the information terminal executes an audio reproduction application in response to a command signal received from the electronic apparatus through the second connecting means and transmits an audio signal reproduced by the audio reproduction application to the electronic apparatus through the second connecting means.

An electronic apparatus according to an aspect of the present invention is capable of connecting an information terminal that processes information. The electronic apparatus includes first connecting means for allowing a connection with the information terminal by using a first communication system, second connecting means for allowing a connection with the information terminal by using a second communication system that is different from the first communication system, and cancelling means for cancelling the connection by the first connecting means, the first connecting means has audio connection means for controlling a communication of an audio signal in accordance with a first profile and voice talk connection means for controlling a communication of voice talk using the information terminal in accordance with the second profile, and the cancelling means selectively cancels the audio connection means only.

Preferably, when the audio connection means is not used, the cancelling means cancels the audio connection means. Preferably, the cancelling means cancels the audio connection means in response to selection of one excluding a media source relating to the audio connection means.

A communication control program according to another aspect of the present invention is capable of connecting an information terminal that processes information, is executed by an electronic apparatus including first connecting means for allowing a connection with the information terminal by using a first communication system, and second connecting means for allowing a connection with the information terminal by using a second communication system that is different from the first communication system, the program includes the steps of connecting the electronic apparatus to the information terminal through the first and second connecting means, selecting a media source, and cancelling the connection by the first connecting means on the basis of the media source selected by the selecting means. Preferably, the communication control program further includes the step of determining whether the first connecting means is unused or not on the basis of the selected media source, and, if so, the step of cancelling cancels the first connecting means.

A communication control method according to another aspect of the present invention is in an electronic system having an information terminal that processes information and an electronic apparatus connected to the information terminal. The method includes the steps of prioritizing one of first connecting means with a first communication system and second connecting means with a second communication system when connections by the first connecting means and the second connecting means are implemented between the information terminal and the electronic apparatus, selecting a media source, and cancelling the connection of the first or second connecting means prioritized by the information terminal on the basis of the selected media source in the electronic apparatus. Preferably, the step of cancelling is performed when a media source excluding a media source relating to the prioritized first or second connecting means is selected.

According to the present invention, a connection by the first connecting means is cancelled in accordance with the selected media source. This allows automatic switching of the connection by the first or second connecting means between the information terminal and the electronic apparatus in accordance with the media source used by a user, thus reducing a burden on user.

### BRIEF DESCRIPTION OF THE DRAWINGS

Fig. 1 is a block diagram illustrating a configuration of a media system according to an embodiment of the present invention;
Fig. 2 is a block diagram illustrating a typical configuration of an information terminal illustrated in Fig. 1;
Figs. 3A and 3B are block diagrams illustrating configurations of a communication control unit of the information terminal;
Fig. 4 is a block diagram illustrating a typical configuration of a vehicle-mounted apparatus illustrated in Fig. 1;
Fig. 5 is a selection example on a media source selection screen in a vehicle-mounted apparatus;
Fig. 6 is a block diagram illustrating a configuration of a communication connecting unit in a vehicle-mounted apparatus according to this embodiment;
Fig. 7 is an operational flow of a communication connecting unit in a vehicle-mounted apparatus according to this embodiment;
Fig. 8 illustrates an example of play of a medium in a media system of this embodiment;
Fig. 9 is another operational flow of a communication connecting unit in a vehicle-mounted apparatus according to this embodiment;
Fig. 10 is another selection example on a media source selection screen in a vehicle-mounted apparatus; and
Fig. 11 is another selection example on a media source selection screen in a vehicle-mounted apparatus.

### DESCRIPTION OF THE PREFERRED EMBODIMENTS

Next, embodiments of the present invention will be described with reference to the attached drawings. A preferable embodiment of the present invention is a media system in which an information terminal brought into a vehicle is connected to a vehicle-mounted apparatus. The information terminal may be a multi-function, portable terminal that can process information and has a communication function. The information terminal may be, for example, a cellular phone, a smart phone, a palmtop personal computer, a laptop computer, a notebook computer or the like. The information terminal may implement various functions with installed applications, such as a connection to an external network, a voice talk, and storage of audio data and/or video data.

On the other hand, the vehicle-mounted apparatus may be an electronic apparatus mounted in a vehicle and may include an audio/video playing function, a television/radio broadcasting receiving function, and a navigation function. The information terminal and the vehicle-mounted apparatus may be connected through a plurality of communication means supporting different communication systems. The communication means may be either wireless communication or wired communication. Preferably, when the information terminal and the vehicle-mounted apparatus are connected through a plurality of communication means, one communication means may be prioritized over other communication means under a predetermined rule. The vehicle-mounted apparatus cancels the prioritized communication means such that a communication means unprioritized by the information terminal may be prevented from being unprioritized.

Preferably, the vehicle-mounted apparatus receives an audio signal and/or video signal output from the information terminal through the selected communication means and outputs it or them on a display and/or through a speaker. The vehicle-mounted apparatus may remotely operate the information terminal through the selected communication means to receive an audio signal and/or a video signal from the information terminal. The vehicle-mounted apparatus may further allow what-is-called a hands-free talk upon arrival of a call at the information terminal. In a media system including an electronic apparatus and an information terminal according to the present invention, communication means according to the usage of a media source may be selected automatically.

### [Embodiments]

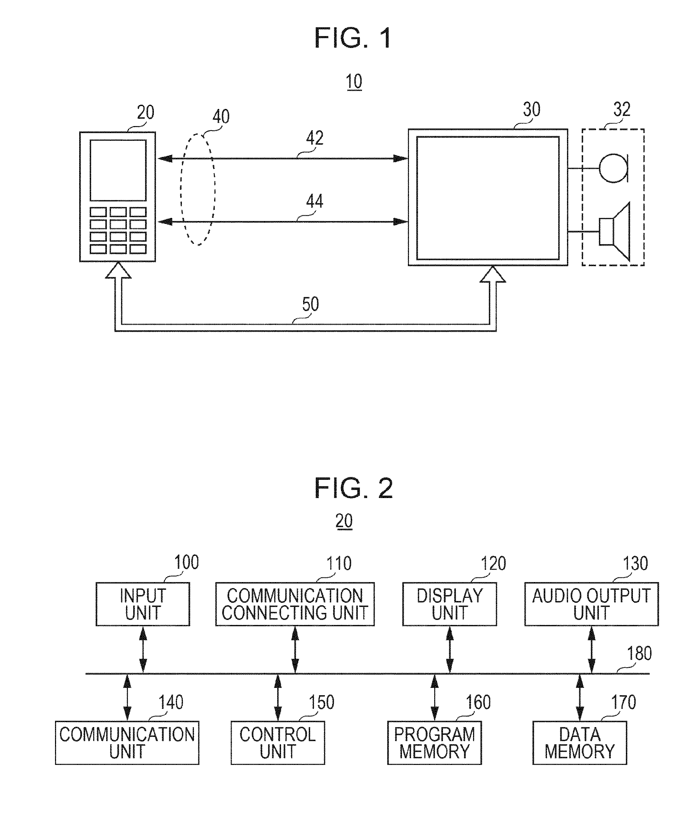

Fig. 1 illustrates a configuration of a media system according to an embodiment of the present invention. In Fig. 1, a media system 10 includes an information terminal 20 and a vehicle-mounted apparatus 30 connected to the information terminal 20. In this case, the information terminal 20 is a multi-function smart phone having a communication function. The vehicle-mounted apparatus 30 has a navigation function and/or a multimedia function and further includes a hands-free talk set 32.

The information terminal 20 is capable of communication connection with the vehicle-mounted apparatus 30 through first connecting means 40 using a first communication system and further is capable of communication connection with the vehicle-mounted apparatus 30 through second connecting means 50 using a second communication system that is different from the first communication system. Here, the first connecting means 40 is a Bluetooth (registered trademark) connection for a short-distance wireless communication. Hereinafter, the Bluetooth will sometimes be abbreviated as BT. The second connecting means 50 is a USB (Universal Serial Bus) connection for a wired communication, here.

The first connecting means 40, that is, the Bluetooth connection 40 includes two communication profiles. One profile is an HFP (Hand Free Profile) connection 42 that controls communication of audio data in a synchronization packet in a hands-free talk. The other communication profile is a BT audio connection 44 using A2DP (Advanced Audio Distribution Profile) that controls high quality asynchronous data transfer of a monaural or stereo audio signal. Both of the information terminal 20 and vehicle-mounted apparatus 30 support the Bluetooth connection 40 including the two communication profiles 42 and 44. Thus, when the information terminal 20 is brought into a vehicle, the information terminal 20 and vehicle-mounted apparatus 30 are paired by the Bluetooth connection 40 including the two communication profiles 42 and 44.

In order for the information terminal 20 and electronic apparatus 30 to support the USB connection 50 that is the second communication system, a connector of a USB cable may be plugged thereto. When the vehicle-mounted apparatus 30 and the information terminal 20 are mutually connected via a USB cable, both of the apparatuses are identified with a USB plug-and-play. If the USB connection 50 is valid, the information terminal 20 is allowed to receive power supply from the vehicle-mounted apparatus 30, and its battery may be charged.

Fig. 2 is a block diagram illustrating a typical configuration of the information terminal. The information terminal 20 includes an input unit 100 which receives an input from a user, a communication connecting unit 110 which allows a connection with the vehicle-mounted apparatus 30 through the first and second connecting means 40 and 50, a display unit 120 which displays various images on a display, an audio output unit 130 which outputs audio, a communication unit 140 which allows data communication with an external network and calling with a telephone over a public wireless network, a control unit 150, a program memory 160 which stores an application and/or a program held by the information terminal 20, a data memory 170 which stores audio data, video data, map data, and so on, and a bus 180 which connects the components.

The program memory 160 may store various applications and programs. For example, an application for reproducing audio data or video data, an application for executing a game, a program for performing a voice talk, a program for browsing information on the Internet through the communication unit 140, and so on. The program memory 160 may contain an extension program for decrypting a command signal transmitted from the vehicle-mounted apparatus 30 and execute an application with the command signal when the information terminal 20 and the vehicle-mounted apparatus 30 are connected through the USB connection 50. When an application for playing music is started by an extension program, for example, an audio signal reproduced by the application is transmitted to the vehicle-mounted apparatus 30 through the USB connection 50.

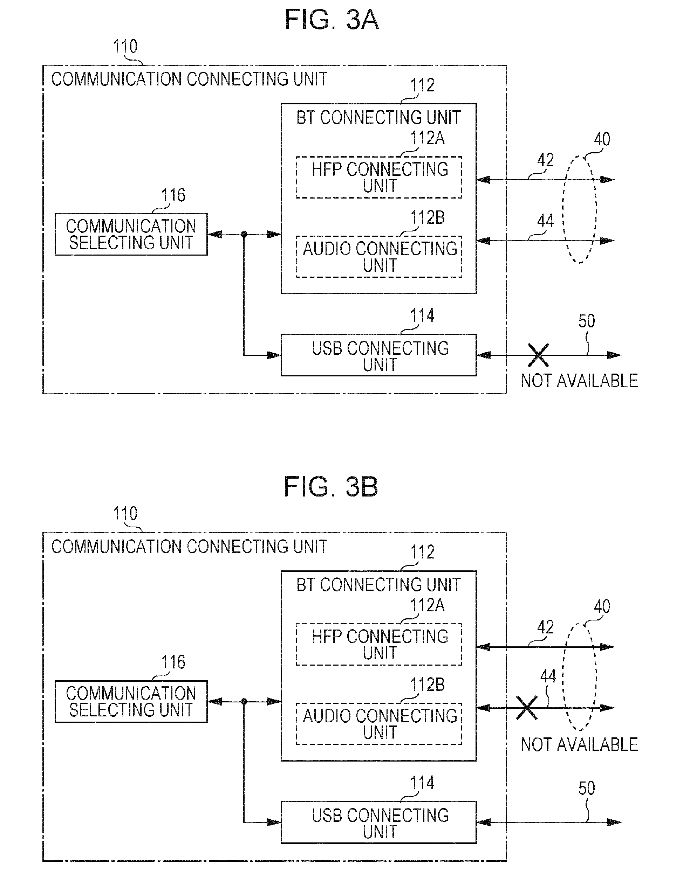

Figs. 3A and 3B are block diagrams illustrating internal configurations of the communication connecting unit 110 of the information terminal 20. The communication connecting unit 110 includes a BT connecting unit 112 which pairs with the vehicle-mounted apparatus 30 through the Bluetooth connection 40, a USB connecting unit 114 which enables the USB connection 50 with the vehicle-mounted apparatus 30, and a communication selecting unit 116 which selectively switches the communication connection between the BT connecting unit 112 and the USB connecting unit 114. The BT connecting unit 112 further includes an HFP connecting unit 112A which enables the HFP connection 42 and an audio connecting unit 112B which enables the BT audio connection 44 with A2DP, as described above.

In the first connection form of the information terminal 20, as illustrated in Fig. 3A, the communication selecting unit 116 performs a selection for prioritizing the Bluetooth connection 40 when the information terminal 20 and the vehicle-mounted apparatus 30 are paired through the Bluetooth connection 40. In other words, the USB connection 50 has a "NOT AVAILABLE" state. In the "NOT AVAILABLE" state, both of the apparatuses are kept connected physically via a USB cable, but the USB connecting unit 114 does not respond to a request from the vehicle-mounted apparatus 30, and the vehicle-mounted apparatus 30 is thus not allowed to recognize the information terminal 20, for example.

On the other hand, in the second connection form of the information terminal 20, as illustrated in Fig. 3B, the communication selecting unit 116 performs a selection for prioritizing the USB connection 50 by the USB connecting unit 114 over the Bluetooth connection 40. In other words, the BT audio connection 44 of the Bluetooth connection 40 now has a "NOT AVAILABLE" state. In the "NOT AVAILABLE" state, the audio connecting unit 112B does not respond to a request from the vehicle-mounted apparatus 30 and the vehicle-mounted apparatus 30 is not allowed to recognize the information terminal 20, for example. The communication selecting unit 116 performs priority communication selection as illustrated in Figs. 3A or B by controlling the communication connecting unit 112.

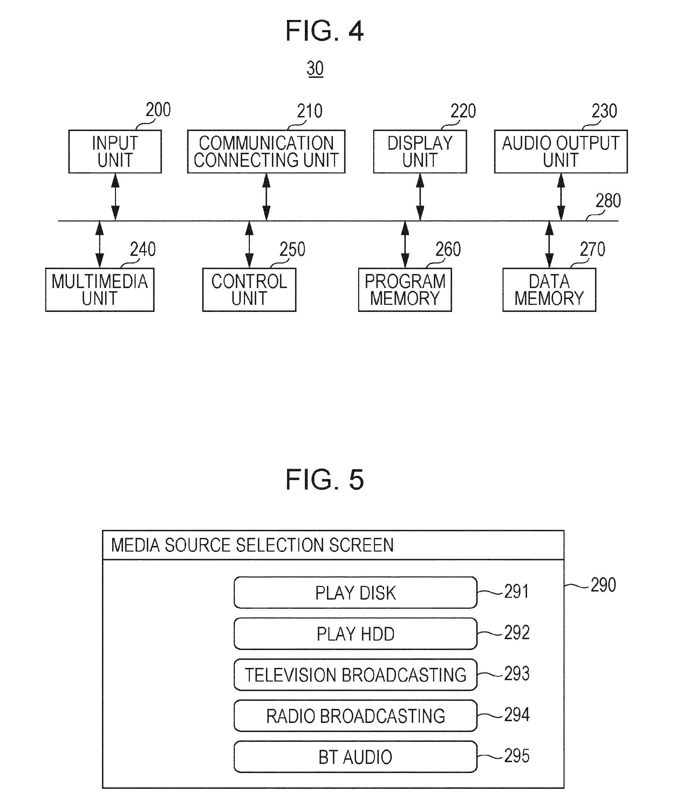

Fig. 4 is a block diagram illustrating a typical configuration of the electronic apparatus 30. As illustrated in Fig. 4, the vehicle-mounted apparatus 30 includes an input unit 200 which receives an input from a user, a communication connecting unit 210 which allows a connection with the information terminal 20 through first and second connecting means 40 and 50, a display unit 220, an audio output unit 230 which outputs audio, a multimedia unit 240 which may play various media, for example, a control unit 250, a program memory 260 which stores a program for executing an application, for example, a data memory 270 which stores data such as audio data, video data, and map data, and a bus 280 which connects the components.

The multimedia unit 240 has a function of reproducing audio data and/or video data recorded on or in a CD, a DVD, a Blu-ray Disc, a memory medium, the data memory 270 or the like and a function of receiving television broadcasting and/or radio broadcasting, for example. The program memory 260 may store a program for controlling communication connection with the information terminal 20, a remote operation program for remotely operating the information terminal 20 when the information terminal 20 is connected thereto through the USB connection 50, and so on in addition to an application for implementing a navigation function and a program for controlling the multimedia unit 240. The vehicle-mounted apparatus 30 may receive GPS information, vehicle speed information, direction information and so on that are necessary for a navigation operation.

Next, selection of a media source by the multimedia unit 240 will be described. A user may perform an operation on a menu screen to select a requested media source. Fig. 5 illustrates a selection example on a media source selection screen. A media source selection screen 290 displays a plurality of user-selectable media sources. If "PLAY DISK" 291 is selected, the screen is changed to a screen for playing a CD, a DVD or a Blu-ray Disc. If "PLAY HDD" 292 is selected, the screen is changed to a screen for reproducing audio/video data stored in the data memory 270. If "TELEVISION BROADCASTING" 293 or "RADIO BROADCASTING" 294 is selected, the screen is changed to an operation screen for performing an operation for receiving it. If "BT AUDIO" 295 is selected, an audio signal may be input from the information terminal 20 through the BT audio connection 44 and be output from the audio output unit 230.

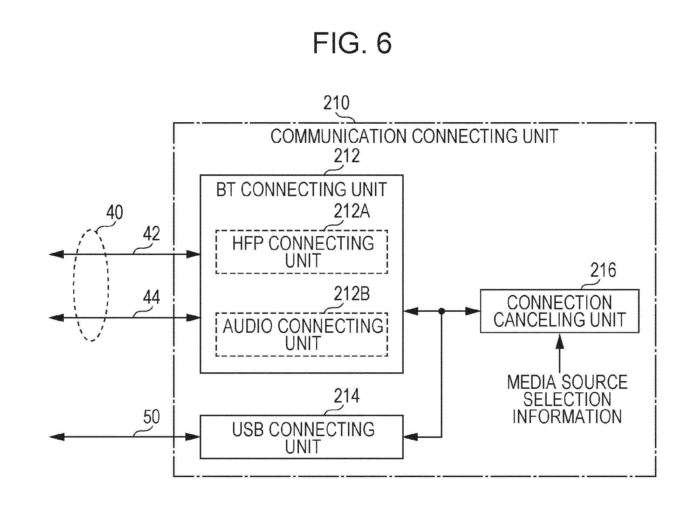

Fig. 6 is a block diagram illustrating an internal configuration of the communication connecting unit 210 in the vehicle-mounted apparatus 30. As illustrated in Fig. 6, the communication connecting unit 210 includes a BT connecting unit 212 which enables a connection by the Bluetooth connection 40, a USB connecting unit 214 which enables a connection by the USB connection 50, and a connection cancelling unit 216 which receives selection information on a media source selected by a user and cancels the connection by the BT connecting unit 212 or USB connecting unit 214 on the basis of the selection information. The BT connecting unit 212 includes an HFP connecting unit 212A which enables a connection by the HFP connection 42 and an audio connecting unit 212B which enabled a connection by the BT audio connection 44 through A2DP. According to a preferred embodiment, if the Bluetooth connection 40 is valid through the BT connecting unit 212, the connection cancelling unit 216 determines whether the BT audio connection 44 is to be used or not on the basis of the media source selection information. If not, the connection cancelling unit 216 cancels the connection by the audio connecting unit 212B. According to another embodiment, the connection cancelling unit 216 determines whether the USB connection 50 is to be used or not on the basis of the media source selection information. If not, the connection cancelling unit 216 cancels the USB connection 50 by the USB connecting unit 214.

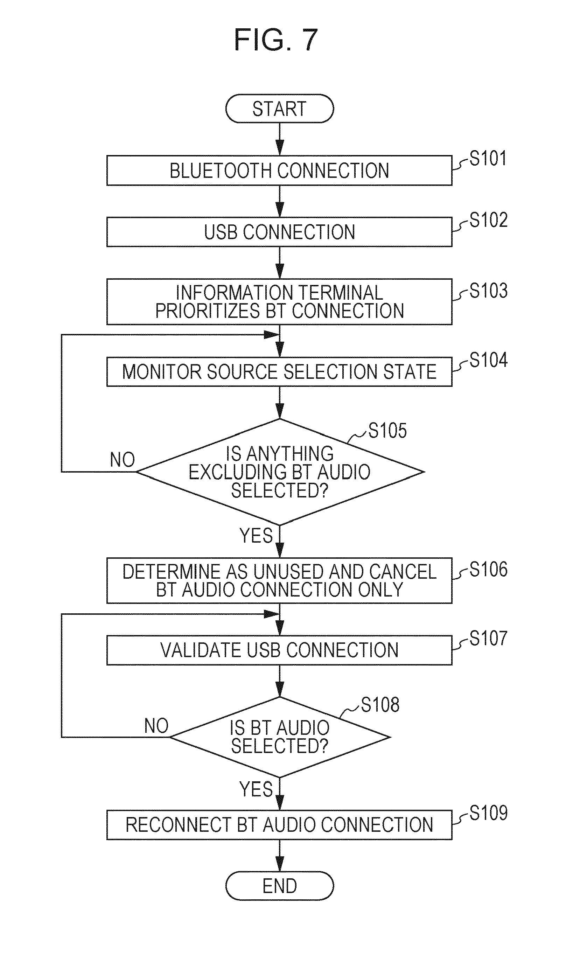

Fig. 7 illustrates a flow describing operations by a communication connecting unit of a vehicle-mounted apparatus according to this embodiment. The operational flow is a preferred embodiment in a case where the information terminal 20 prioritizes the Bluetooth connection 40 as illustrated in Fig. 3A. When the information terminal 20 is brought into a vehicle, an apparatus supporting the Bluetooth is searched between the information terminal 20 and the vehicle-mounted apparatus 30. If the supporting apparatuses receive mutual responses, the apparatuses are mutually recognized. The Bluetooth connection 40 is established, or they are paired (S101). Next, a user may connect the information terminal 20 and the vehicle-mounted apparatus 30 via a USB cable (S102). The USB connection may generally be recognized through a USB plug-and-play. In this case, because the information terminal 20 prioritizes the Bluetooth connection 40 over the USB connection 50, the USB connecting unit 114 of the information terminal 20 makes the USB connection 50 not available (S103).

Thus, the Bluetooth connection 40 is established between the information terminal 20 and the vehicle-mounted apparatus 30. For example, when a call arrives at the information terminal 20, the incoming call signal is notified from the information terminal 20 through the HFP connection 42 to the vehicle-mounted apparatus 30, allowing a hands-free talk. If a different application is being executed in the information terminal 20 or vehicle-mounted apparatus 30, the incoming call notification interrupts. If the "BT AUDIO" 295 is selected by a user on the media source selection screen 290 in the vehicle-mounted apparatus 30 (Fig. 5), the vehicle-mounted apparatus 30 may receive an audio signal from the information terminal 20 through the BT audio connection 44 and output it from the audio output unit 230.

Under this condition, the connection cancelling unit 216 of the vehicle-mounted apparatus 30 monitors a media source selection state by a user (S104). If a user selects one excluding the "BT AUDIO" 295 on the basis of the selection information (S105), the connection cancelling unit 216 determines that the BT audio connection 44 is not to be used and cancels the BT audio connection 44 with the audio connecting unit 212B of the BT connecting unit 212 (S106). This cancelling operation may be implemented by, for example, inhibiting the audio connecting unit 212B to respond to a response signal and an acknowledge signal which are replied to an inquiry signal and a request signal from the information terminal 20. The information terminal 20 may not recognize the vehicle-mounted apparatus without obtaining a response from the audio connecting unit 212B. In this case, the information terminal 20 determines that the BT audio connection 44 is not connected. This results in elimination of a conflict relationship between the BT audio connection 44 and the USB connection 50, and the information terminal 20 performs a plug-and-play recognition to validate the USB connection 50 (S107). Thus, the information terminal 20 and the vehicle-mounted apparatus 30 are now communicable through the SB connection 50. The BT audio connection 44 is only cancelled, and it should be noted that the HFP connection 42 is kept valid.

The connection cancelling unit 216 keeps monitoring the selection information on the selection of a media source even after that. If a user selects the "BT AUDIO" 295 (S108), the cancelling of the audio connecting unit 212B is cancelled, and the information terminal 20 is enabled to connect to the vehicle-mounted apparatus 30 through the BT audio connection 44 (S109). If the BT audio connection 44 is validated, the information terminal 20 is inhibited to use the USB connection 50 again in advance.

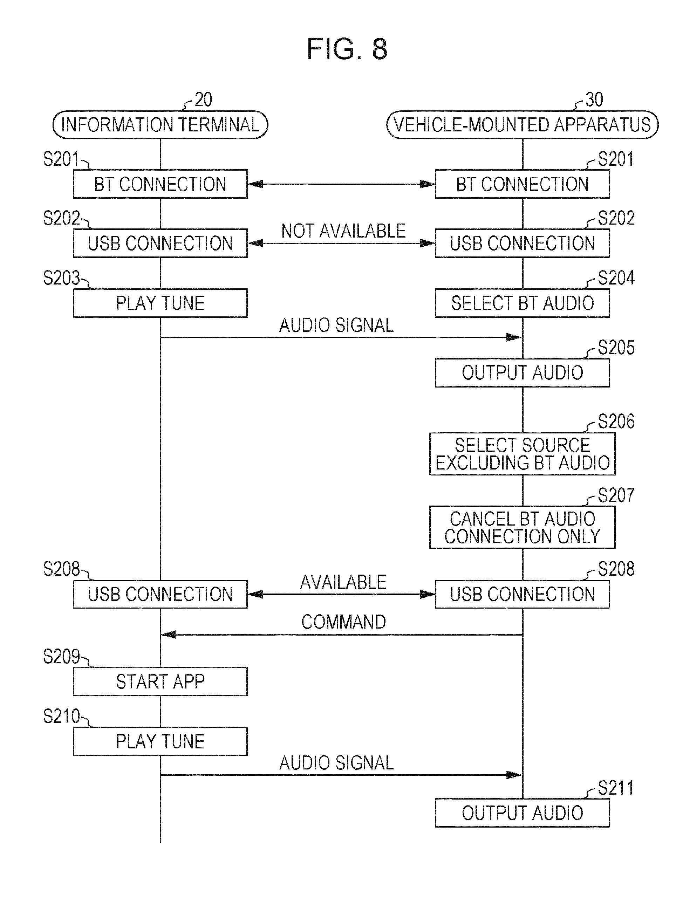

Fig. 8 illustrates a sequence example for playing a medium in the media system 10 according to this embodiment. When the Bluetooth connection 40 is established between the information terminal 20 and the vehicle-mounted apparatus 30 (S201), the information terminal 20 prioritizes the Bluetooth connection 40 and makes the USB connection 50 not available (S202). Next, if a user starts an application for playing music in the information terminal 20 and plays a requested tune (S203), the reproduced audio signal is transmitted from the audio connecting unit 112B of the information terminal 20 through the BT audio connection 44 to the vehicle-mounted apparatus 30.

In the vehicle-mounted apparatus 30, the selected media source is the BT audio 295 (S204), the audio signal from the BT audio connection 44 is supplied through the audio connecting unit 212B to the audio output unit 230, and the sound is output (S205). If a user selects a source excluding the BT audio after that (S206), the connection cancelling unit 216 of the vehicle-mounted apparatus 30 causes the audio connecting unit 212B to cancel the BT audio connection 44 (S207). Thus, the information terminal 20 establishes a USB connection with the vehicle-mounted apparatus 30 (S208). If a user inputs an instruction for performing a remote operation by the information terminal 20 through the input unit 200 of the vehicle-mounted apparatus 30, the control unit 250 in response to the instruction transmits a command signal to the information terminal 20 through the USB connection 50.

The control unit 150 of the information terminal 20 decrypts the received command signal and starts the application for playing a requested tune (S209). A tune play screen is transferred from the information terminal 20 to the vehicle-mounted apparatus 30. If a user input an instruction to play a requested tune in the vehicle-mounted apparatus 30, the instruction is transmitted to the information terminal 20. Thus, the requested tune is played (S210), and the reproduced audio signal is received by the USB connecting unit 214 of the vehicle-mounted apparatus 30 through the USB connection 50. After that, the received signal is audio-output by the audio output unit 230 (S211).

In this way, in the media system 10 according to this embodiment, the BT audio connection 44 is automatically cancelled in accordance with the media source selected by a user. A user may immediately use the USB connection 50 without a complicated operation when the BT audio connection 44 is not in use. When the data communication speed by the USB connection 50 is higher than that of the BT audio connection 44, a high quality exchange of an audio signal having a larger size may be provided with a high sampling rate or a high bit rate.

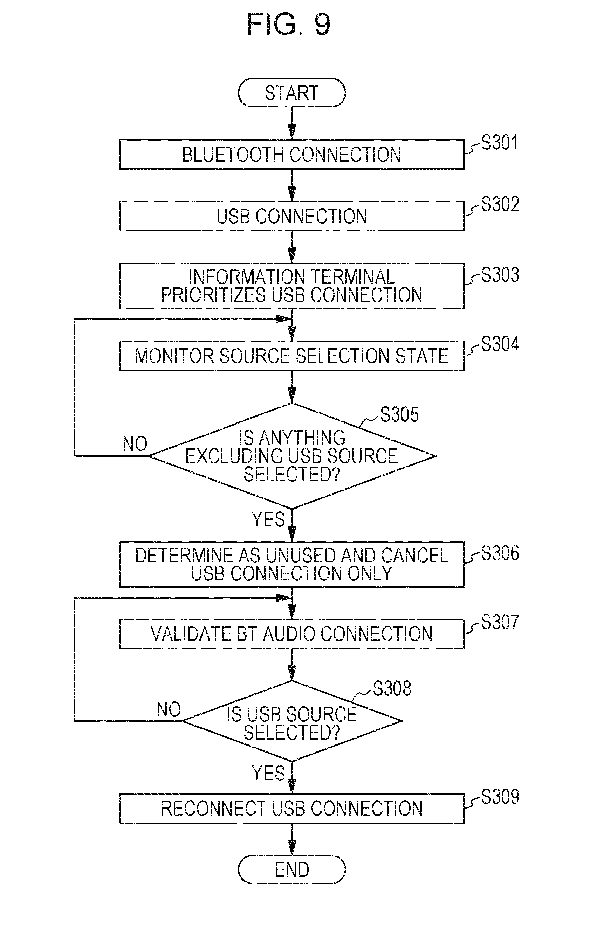

Next, other operations of a communication connecting unit of a vehicle-mounted apparatus of this embodiment will be described with reference to the flow in Fig. 9. The operational flow is a preferred example for the information terminal 20 to prioritize the USB connection 50 as illustrated in Fig. 3B. When the information terminal 20 is brought into a vehicle, a Bluetooth connection 40 is established between the information terminal 20 and the vehicle-mounted apparatus 30 (S301). Next, if a user connects the information terminal 20 and the vehicle-mounted apparatus 30 via a USB cable (S302), both of the apparatuses are recognized through a USB plug-and-play. In this case, the information terminal 20 prioritizes the USB connection 50 over the Bluetooth connection 40, the audio connecting unit 112B makes the BT audio connection 44 not recognizable and not available (S303).

Thus, the information terminal 20 and the vehicle-mounted apparatus 30 are connected through the USB connection 50, and data communication using the USB connection 50 is allowed between the apparatuses. When a call arrives at the information terminal 20, the incoming call signal is notified from the HFP connection 42 to the vehicle-mounted apparatus 30, allowing a hands-free talk. Under this condition, the connection cancelling unit 216 of the vehicle-mounted apparatus 30 monitors a media source selection state by a user (S304).

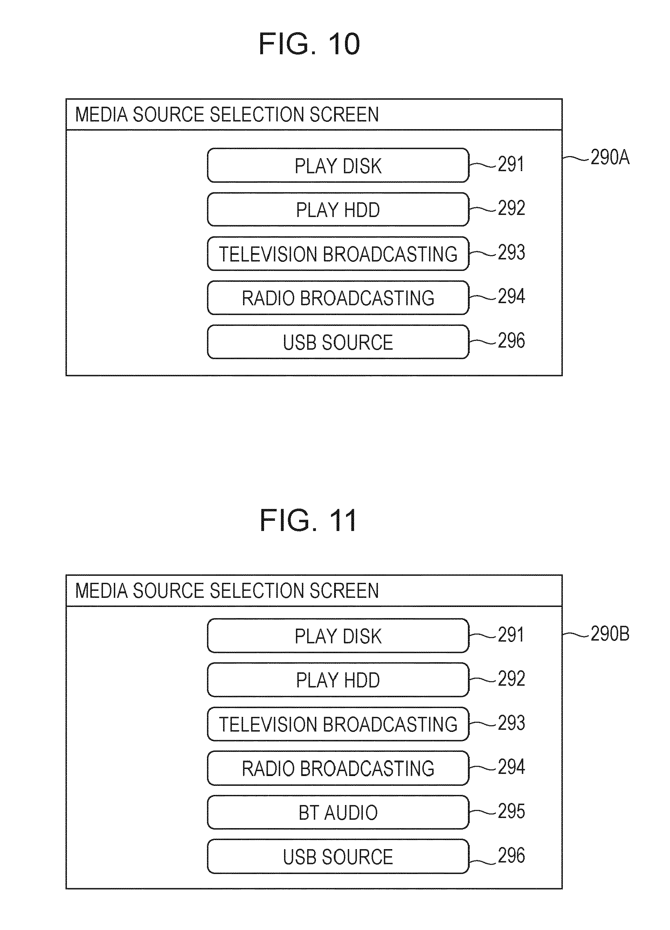

Fig. 10 is an example of the media source selection screen. Unlike the media source selection screen 290 in Fig. 5, the media source selection screen 290A in Fig. 10 includes a USB source 296 instead of the BT audio 295. The connection cancelling unit 216 monitors whether a user has selected one excluding the USB source 296 or not on the basis of the selection information (S305). If one excluding the USB source is selected, the connection cancelling unit 216 determines that the USB connection 50 is not to be used and cancels the USB connection 50 through the USB connecting unit 214 (S306). This cancelling operation may be implemented by, for example, inhibiting to respond to a request or the like from the information terminal 20. Because the information terminal 20 may not recognize the vehicle-mounted apparatus 30, the information terminal 20 determines that the USB connection 50 is not connected. As a result, the communication selecting unit 116 causes the audio connecting unit 112B to operate to validate the BT audio connection 44 (S307). Thus, the information terminal 20 and the vehicle-mounted apparatus 30 are now communicable through the BT audio connection 44.

The connection cancelling unit 216 keeps monitoring the selection information on the selection of a media source even after that. If a user selects the USB source 296 (S308), the cancelling of the USB connection 50 by the USB connecting unit 214 is cancelled. In other words, the information terminal 20 is enabled to connect to the vehicle-mounted apparatus 30 through the USB connection 50 (S309). The reconnection of the USB connection 50 makes the BT audio connection 44 not available. In this way, even when the information terminal 20 prioritizes the USB connection 50, the connection may be automatically changed from the USB connection 50 to the BT audio connection 44 in accordance with the media source selection.

Fig. 11 is a selection example of another media source selection screen. A media source selection screen 290B in Fig. 11 includes the BT audio 295 illustrated in Fig. 5 and the USB source 296 illustrated in Fig. 10.

When the information terminal 20 prioritizes a Bluetooth connection as illustrated in Fig. 3A and if a user selects the USB source 296 that is a specific source, the connection cancelling unit 216 of the vehicle-mounted apparatus 30 cancels the BT audio connection 44. If a user selects one excluding the media sources 291 to 294, the connection cancelling unit 216 does not cancel the BT audio connection 44. When the information terminal 20 prioritizes a USB connection as illustrated in Fig. 3B and if a user selects the BT audio 295 that is a specific source, the connection cancelling unit 216 of the vehicle-mounted apparatus 30 cancels the USB connection 50. If a user selects one excluding the media sources 291 to 294, the connection cancelling unit 216 does not cancel the USB connection 50.

Having described preferred embodiments of the present invention above, the present invention is not limited to the specific embodiments, and various changes, modifications, and alterations are possible without departing from the claimed spirit and scope of the present invention. According to the aforementioned embodiment, a connection by a first communication system is a Bluetooth connection and a connection by a second communication system is a USB connection. However, they are given for illustration purpose only. The first and second communication systems may be other communication means within the scope where the present invention is applicable.

## Claims

1. An electronic apparatus (30) capable of connecting an information terminal (20) that processes information, the apparatus comprising:
first connecting means allowing a connection with the information terminal (20) by using a first communication system;
second connecting means allowing a connection with the information terminal (20) by using a second communication system that is different from the first communication system;
selecting means (290) for selecting a media source; and
cancelling means (216) for cancelling the connection by the first connecting means on the basis of the media source selected by the selecting means (290).

2. The electronic apparatus (30) according to Claim 1, wherein the first connecting means includes audio connection means for controlling communication of an audio signal in accordance with a first profile and voice talk connection means for controlling communication of voice talk through the information terminal (20) in accordance with a second profile; and
the cancelling means (216) cancels the audio connection means only.

3. The electronic apparatus (30) according to Claim 1 or 2, wherein when the selecting means (290) selects a specific media source, the cancelling means (216) cancels the connection by the first connecting means.

4. The electronic apparatus (30) according to Claim 1 or 2, wherein when the selecting means (290) selects a media source excluding a media source relating to the first connecting means, the cancelling means (216) cancels the connection by the first connecting means.

5. The electronic apparatus (30) according to any one of Claims 1 to 4, wherein the second connecting means transmits a command signal that controls the information terminal (20).

6. The electronic apparatus (30) according to Claim 5, wherein the second connecting means receives an audio signal reproduced on the basis of the command signal from the information terminal (20).

7. The electronic apparatus (30) according to any one of Claims 1 to 6, wherein the first connecting means is a wireless communication, and the second connecting means is a wired communication.

8. The electronic apparatus (30) according to any one of Claims 1 to 7, wherein the communication speed of the second connecting means is higher than the communication speed of the first connecting means.

9. The electronic apparatus (30) according to any one of Claims 1 to 8, wherein an audio signal received from the second connecting means has a higher sampling rate or transmission bit rate than an audio signal received from the first connecting means.

10. The electronic apparatus (30) according to any one of Claims 1 to 9, wherein the first connecting means is a Bluetooth connection, and the second connecting means is a USB connection.

11. A communication control method in an electronic system having an information terminal (20) that processes information and an electronic apparatus (30) connected to the information terminal (20), the method comprising the steps of:
prioritizing one of first connecting means with a first communication system and second connecting means with a second communication system when connections by the first connecting means and the second connecting means are implemented between the information terminal (20) and the electronic apparatus (30);
selecting a media source; and
cancelling the connection of the first or second connecting means prioritized by the information terminal (20) on the basis of the selected media source in the electronic apparatus (30).

12. The communication control method according to Claim 11, wherein the step of cancelling is performed when a media source excluding a media source relating to the prioritized first or second connecting means is selected.

13. The communication control method according to Claim 11 or 12, wherein the first connecting means includes audio connection means for controlling communication of an audio signal in accordance with a first profile and voice talk connection means for controlling communication of voice talk through the information terminal (20) in accordance with a second profile, wherein the step of cancelling cancels the audio connection means only.
